# EUROPEAN PATENT APPLICATION

(11) **EP 4 841 742 A1**
(43) Date of publication of application: **18.11.2026**
(21) Application number: 25810043.7
(22) Date of filing: 07.05.2025
(51) Int. Cl.: H01M 10/0585, H01M 10/0562, H01M 10/052, H01M 4/134, H01M 4/66, H01M 10/44, H01M 4/525, H01M 4/505, H01M 4/02

(54) **ALL-SOLID-STATE BATTERY COMPRISING SILICON-CONTAINING LAYER**

(30) Priority: 08.05.2024 US 202463644357 P; 27.08.2024 US 202418816838
(71) Applicant: LG Energy Solution, Ltd., Seoul 07335 (KR); The Regents of the University of California, Oakland, CA 94607-5200 (US)
(72) Inventor: LEE, Jeongbeom, Daejeon 34122 (KR); SONG, Min Sang, Daejeon 34122 (KR); MENG, Ying Shirley, San Diego, California 92109 (US); HAM, So-Yeon, San Diego, California 92121 (US); ZHANG, Minghao, La Jolla, California 92037 (US)
(74) Representative: Goddar, Heinz J.
(86) International application number: PCT/KR2025/006064
(87) International publication number: WO 2025/234725

(57) **Abstract**

Disclosed is a lithium all-solid-state battery and a method for manufacturing the same. The lithium all-solid-state battery includes a positive electrode, a negative electrode current collector, a solid electrolyte layer between the negative electrode current collector and the positive electrode, and a silicon-containing metal layer on a surface of the negative electrode current collector facing the solid electrolyte layer. The lithium metal is formed on the negative electrode current collector by movement of lithium metal ions from the positive electrode to the silicon-containing metal layer on the surface of the negative electrode current collector through charge, and a ratio (Ns/P) of a charge capacity of the silicon-containing metal layer (Ns) to a charge capacity of the positive electrode (P) is less than 0.3.

## Description

### CROSS-REFERENCE TO RELATED APPLICATIONS

The present application claims priority to U.S. Patent Application No. 63/644,357, filed May 8, 2024, and U.S. Patent Application No. 18/816,838, filed August 27, 2024, the entire contents of which are herein expressly incorporated by reference in the entirety.

### FIELD OF TECHNOLOGY

The present disclosure relates to an all-solid-state battery comprising a negative electrode including a silicon-containing layer.

### BACKGROUND

There continues to be an increase in electrified transportation, exemplified by the widespread adoption of electric vehicles (EVs) and the emergence of urban air mobility (UAM) vehicles. Simultaneously, there is a growing demand for stationary energy storage systems, notably in the residential and industrial sectors, powered by solar and wind generators. This shift is driven in part by the pressing need to mitigate the adverse environmental and climate impacts associated with traditional internal combustion engines and other non-renewable means of power generation. Thus, the development of battery technologies with high energy density, while also ensuring enhanced safety, has become an imperative.

Conventional liquid lithium-ion batteries were critical to the advancement of electrified transportation and energy storage systems, and have had a significant and positive impact on green energy and climate change mitigation efforts. While such conventional liquid lithium-ion batteries are superior to many other energy sources, liquid lithium-ion batteries also have certain limitations. For example, various safety mechanisms are critical for lithium-ion batteries to restrict voltage and internal pressures, but these safety features typically result in increased weight and performance limitations in certain instances. Moreover, lithium-ion batteries are susceptible to aging, leading to capacity loss and eventually failure after a number of years of use.

In an all-solid-state battery, a solid electrolyte is used instead of a liquid electrolyte, making the entire battery solid. In a conventional solid state battery, a solid electrolyte replaces a liquid electrolyte system, and thus reduces the risk of ignition or explosion, thereby increasing safety. The solid electrolyte is intrinsically non-flammable and may accommodate a wider temperature range, allowing it to function as electrochemical energy storage without the need for additional safety devices. Solid state batteries, which offer higher energy density and are safer than batteries with a liquid electrolyte system, such as conventional lithium-ion batteries.

Still, all-solid-state batteries have drawbacks when lithium metal used in the negative electrode forms an oxide layer due to lithium metal reactivity. Therefore, so-called negative-electrode-free (or anode-free) all-solid-state batteries have also been developed. Commonly-assigned US 11,063,290 to Park et al., hereby incorporated by reference, discloses one such anode-free battery where lithium metal is formed on the negative electrode current collector by movement of lithium ions from the positive electrode to the negative electrode current collector through charge after assembling the battery. The lithium metal that is formed on the negative electrode current collector functions as negative electrode or negative electrode active material.

Lithium metal is considered an ultimate anode material for future high-energy rechargeable batteries with specific energy higher than 350 Wh/kg. The energy density of lithium metal batteries to withstand repeated charge and discharge cycles depends on the efficiency of lithium deposition and stripping. The morphology and microstructure of deposited lithium metal is a critical factor influencing the Coulombic efficiency (CE) and cycle life of lithium metal batteries. The ideal microstructure for lithium deposits entails dense formations with minimal porosity (< 1%), a columnar structure featuring reduced surface area, and large grain sizes (>50 µm) exhibiting uniform defect distribution. These favored attributes promote uniform lithium stripping at the reaction front, thereby avoiding the formation of highly porous and whisker-like inactive lithium structures.

In a lithium metal battery with solid-state electrolytes such as Li₇La₃Zr₂O₁₂ (LLZO) and Li₆PS₅Cl (LPSCl), electrochemically deposited lithium metal typically exhibits a fully dense morphology with large grain size. However, low critical current densities (<1.5 mA/cm²) are reported over which a cell failure occurs. While elevated temperatures yield high current densities (~3 mA/cm²), such values remain incomparable to those achieved by lithium metal batteries with liquid electrolytes at room temperature. The kinetic limitations of lithium metal are fundamentally influenced by crystallographic orientation, owing to the anisotropic nature of lithium metal growth.

Moreover, achieving optimal interfacial contact in solid-state batteries requires the application of adequate load stress so that the mechanical properties of the involved solids must be appropriately designed. Previous studies in anode-free solid-state batteries have explored interfacial layer materials (referred to as the "seed" layer), such as Ag and Au, to improve overall performance. Despite the inherent lithophilic properties of Ag and Au facilitating the formation of alloy phases with decreased bulk modulus values, achieving a substantial reduction below 30 GPa mandates a considerable lithium alloy concentration (x = 0.8).

Thus, there exists a need for improved lithium battery structures, including all-solid-state anode-free lithium batteries, for use as an anode material, which are suitable for use in the industry and that are safe and cost-effective. Therefore, continuous efforts are conducted to develop a lithium secondary battery having improved safety and lifetime characteristics while having a high capacity compared to conventional lithium-ion batteries.

### SUMMARY

Disclosed aspects solve these and other problems associated with conventional all-solid-state batteries by application of a metal layer, *e.g.*, silicon-containing metal layer, on the negative electrode current collector before charging. Controlling parameters of the metal layer, *e.g.*, N/P ratio, thickness, and morphology, has been shown to exhibit a battery with exceptional charging characteristics and overall performance.

The inventors found using an amorphous silicon-containing seed layer in all-solid-state battery could reduce the strain within lithium metal and control the morphology and orientation of lithium metal growth within the solid electrolyte. This insight led to the development of an amorphous Li-Si seed layer that improves the critical current density by up to five times at room temperature for anode-free solid-state batteries through the control of grain selection growth.

In particular, the inventors found that by providing a metal layer, *e.g.*, silicon-containing layer, having a specified Ns/P ratio, thickness, and morphology on a negative electrode current collector, and subsequent controlled lithiation of the silicon layer, lithium metal formation on the negative electrode current collector could be optimized in an anode-free battery to thereby increase battery performance. Depending on silicon layer thickness, initial lithiation of silicon capacity varies during charging. The lithiated silicon layer functions as a substrate for lithium metal nucleation as a lithium deposition site. Without intending to be bound by theory, it is believed that, during this process, subsequent lithiation of the silicon layer is impeded by decreasing the Ns/P ratio of the silicon layer and controlling the thickness of the silicon layer so that the silicon layer may be fully lithiated and then Li may be plated.

In one aspect, there is provided a lithium all-solid-state battery comprising a positive electrode, a negative electrode current collector, a solid electrolyte layer between the negative electrode current collector and the positive electrode, and a silicon-containing metal layer on a surface of the negative electrode current collector facing the solid electrolyte layer. The lithium metal is formed on the negative electrode current collector by movement of lithium metal ions from the positive electrode to the silicon-containing metal layer on the surface of the negative electrode current collector through charge, and a ratio (Ns/P) of a charge capacity of the silicon-containing metal layer (Ns) to a charge capacity of the positive electrode (P) is less than 0.3.

The silicon-containing metal layer may comprise amorphous silicon. The amorphous silicon may comprise LiₓSi₁₋ₓ, wherein 0.5 < x < 0.79.

The ratio (Ns/P) of the charge capacity of the silicon-containing metal layer (Ns) to the charge capacity of the positive electrode (P) may be less than 0.1.

The ratio (Ns/P) of the charge capacity of the silicon-containing metal layer (Ns) to the charge capacity of the positive electrode (P) may be in a range of 0.001 or more to less than 0.1.

The silicon-containing metal layer may have a thickness in a range of 5 nm to 5 µm.

The silicon-containing metal layer may have a thickness in a range of 50 nm to 1 µm.

The silicon-containing metal layer may have a thickness in a range of 100 nm to 500 nm.

The lithium metal may form a lithium metal layer having a thickness in a range of 1 µm to 50 µm.

The silicon-containing metal layer may be directly on the surface of the negative electrode current collector facing the solid electrolyte layer.

The lithium metal may be directly on the silicon-containing metal layer on the surface of the negative electrode current collector.

The silicon-containing metal layer may be free of a silver-containing material.

The solid electrolyte layer may comprise Li₇La₃Zr₂O₁₂ (LLZO), Li₆PS₅Cl (LPSCl), or LiPON.

The positive electrode may comprise a positive electrode current collector and a positive electrode active material layer on at least one side of the positive electrode current collector, the positive electrode active material layer comprising a lithium-containing positive electrode active material selected from the group consisting of Li-NMC, LiCoO₂, LiMn₂O₄, LiMnO₂, and LiNiO₂.

The charge may be in a voltage range of 4.5 V to 2.5 V.

The negative electrode current collector may comprise at least one material selected from the group consisting of carbon, titanium, stainless steel, nickel, aluminum, and copper.

In another aspect, there is provided a method of manufacturing a lithium all-solid-state battery. The method comprises providing a cell comprising a positive electrode, a negative electrode current collector, a solid electrolyte layer between the negative electrode current collector and the positive electrode, and a silicon-containing metal layer on a surface of the negative electrode current collector facing the solid electrolyte layer, and charging the cell to form a lithium metal on the negative electrode current collector by movement of lithium metal ions from the positive electrode to the silicon-containing metal layer on the surface of the negative electrode current collector through charge. A ratio (Ns/P) of a charge capacity of the silicon-containing metal layer (Ns) to a charge capacity of the positive electrode (P) is less than 0.3.

A thickness of the silicon-containing metal layer may be in a range of 50 nm to 200 nm.

The lithium metal may form a lithium metal layer having a thickness in a range of 1 µm to 50 µm.

In another aspect, there is provided a lithium all-solid-state battery comprising
a positive electrode, a negative electrode current collector, a solid electrolyte layer between the negative electrode current collector and the positive electrode, and a silicon-containing metal layer on a surface of the negative electrode current collector facing the solid electrolyte layer. A ratio (Ns/P) of a charge capacity of the silicon-containing metal layer (Ns) to a charge capacity of the positive electrode (P) is less than 0.3, and the silicon-containing metal layer has a thickness in a range of 100 nm to 500 nm.

Each aspect may further have one or more additional elements in any combination.

### BRIEF DESCRIPTION OF THE DRAWINGS

The accompanying drawings illustrate aspects of the present disclosure, and together with the detailed disclosure, serve to provide a further understanding of the technical aspects of the present disclosure, and the present disclosure should not be construed as being limiting to the drawings. In the drawings, for clarity of description, the shape, size, scale or proportion of the elements may be exaggerated for emphasis.
FIGS. 1a, 1b, and 1c show an all-solid-state battery according to an aspect.
FIGS. 2a and 2b show voltage/capacity characteristics of related-art all-solid-state batteries according to Comparative Examples.
FIGS. 3a and 3b show an FIB-SEM image (FIG. 3a) and a schematic view (FIG. 3b) of related-art all-solid-state batteries according to Comparative Examples.
FIGS. 4a and 4b show voltage/capacity characteristics of related-art all-solid-state batteries according to Comparative Examples.
FIG. 5 shows N/P ratio characteristics of related-art all-solid-state batteries according to a Comparative Examples.
FIG. 6 shows voltage/capacity characteristics of related-art all-solid-state batteries according to a Comparative Examples.
FIGS. 7a, 7b, and 7c show voltage/capacity characteristics of related-art all-solid-state batteries according to Comparative Examples.
FIGS. 8a and 8b show FIB-SEM images of an all-solid-state battery according to an Example (FIG. 8a) and a related-art all-solid-state battery according to a Comparative Example (FIG. 8b).
FIGS. 9a and 9b show voltage/time characteristics of the all-solid-state battery according to the Example in FIG. 8a (FIG. 9b) and the Comparative Example in FIG. 8b (FIG. 9a).
FIGS. 10a, 10b, and 10c show voltage/capacity characteristics of a related-art all-solid-state battery according to a Comparative Example (FIG. 10a) and an Example (FIG. 10b), and an FIB-SEM image of the Example in FIG. 10b (FIG. 10c).
FIG. 11 shows an FIB-SEM image of all-solid-state batteries according to an Example and Comparative Examples.
FIG. 12 shows voltage/time characteristics of an all-solid-state battery according to an Example.
FIG. 13 shows an FIB-SEM image of the Example in FIG. 12.
FIGS. 14a and 14b show rate performance testing for lithium metal deposition and stripping in thin-film batteries (FIG. 14a) and voltage profiles for Cu/LiPON/Li and Cu/Si/LiPON/Li cell at different current densities (FIG. 14b).
FIG. 15 illustrates N/P ratio as a function of Si-layer thickness according to embodiments.

### DETAILED DESCRIPTION

Hereinafter, the present disclosure will be described in detail. It should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation. Therefore, the aspects of the disclosure described herein and the elements shown in the drawings are just aspects of the present disclosure, but not intended to fully describe the technical aspects of the present disclosure, so it should be understood that other equivalents and modifications could have been made thereto at the time the application was filed. Unless defined otherwise, all the technical and scientific terms used herein have the same meanings as commonly known by a person skilled in the art. In the case that there is a plurality of definitions for the terms herein, the definitions provided herein will prevail.

Unless specified otherwise, all the percentages, portions and ratios in the present disclosure are on weight basis.

Unless indicated to the contrary, the numerical parameters set forth in the following specification and attached claims are approximations that may vary depending upon the desired properties sought to be obtained according to aspects of the disclosure. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values.

While compositions and methods are described herein in terms of "comprising" various components or steps, the compositions and methods may also "consist essentially of" or "consist of" the various components and steps. The term "comprise(s)" or "include(s)" when used in this specification, specifies the presence of stated elements, but does not preclude the presence or addition of one or more other elements, unless the context clearly indicates otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure. The terms "about" and "approximate", when used along with a numerical variable, generally means the value of the variable and all the values of the variable within an experimental error (*e.g*., 95% confidence interval for the mean) or within a specified value ± 10% or within a broader range. Unless otherwise indicated, all numbers expressing quantities of ingredients, properties such as molecular weight, reaction conditions, and so forth used in the present specification and associated claims are to be understood may be modified by the term "about."

"A and/or B" when used in this specification, specifies "either A or B or both."

As used herein, the term "average particle size" means average obtained particle size as observed using scanning electron microscopy (SEM).

As used herein, the term "mean particle size" means mean particle size as observed using SEM.

### <All-Solid-State Battery>

An aspect of the present disclosure relates to an all-solid-state battery comprising a solid electrolyte material as an electrolyte. Specific examples of the all-solid-state battery include any type of primary battery, secondary battery, fuel cell, solar cell or capacitor such as a super capacitor. In aspects, the battery may be a lithium-ion secondary battery. Aspects of the disclosure herein may be implemented in a secondary battery with various form factors or battery formats, including for example in a pouch-type battery, a cylindrical battery, or a prismatic battery.

According to aspects, the all-solid-state battery may be a lithium all-solid-state battery comprising a positive electrode, a negative electrode current collector, and a solid electrolyte layer between the negative electrode current collector and the positive electrode. The lithium all-solid-state battery comprises a metal layer on a surface of the negative electrode current collector facing the solid electrolyte layer.

According to aspects, the metal layer may comprise any suitable metal-containing material. Preferably, the metal layer is a silicon-containing metal layer comprising, for example, pure Si or SiOₓ, wherein 0 ≤ x < 2. For purposes of this disclosure, the metal layer will be referred to as a silicon-containing metal layer. But it will be understood that the metal layer is not intended to be so limited and that any suitable other metal material may be employed in aspects. For example, the metal-containing material may include, but is not limited to, Al, Sn, Zn, Sb, and/or Mg.

According to aspects, the lithium all-solid-state battery may be a so-called negative-electrode-free (or anode-free) all-solid-state battery. This structure is capable of forming a lithium metal layer on the silicon-containing metal layer on the surface of the negative electrode current collector by lithium ions transferred from a positive electrode active material through charge after assembling the battery. This process fundamentally blocks contact of the lithium metal with the atmosphere when assembling the battery, and comprises a positive electrode active material capable of stably forming the lithium metal layer. The negative electrode free battery structure is assembled using only a negative electrode current collector having the silicon-containing metal layer formed on the surface. Then, through initial or subsequent charge, lithium ions released from a positive electrode mixture form a lithium metal layer on the negative electrode current collector as a negative electrode mixture to form a negative electrode having a known constitution of negative electrode current collector/negative electrode mixture, and as a result, a constitution of a common lithium secondary battery is formed.

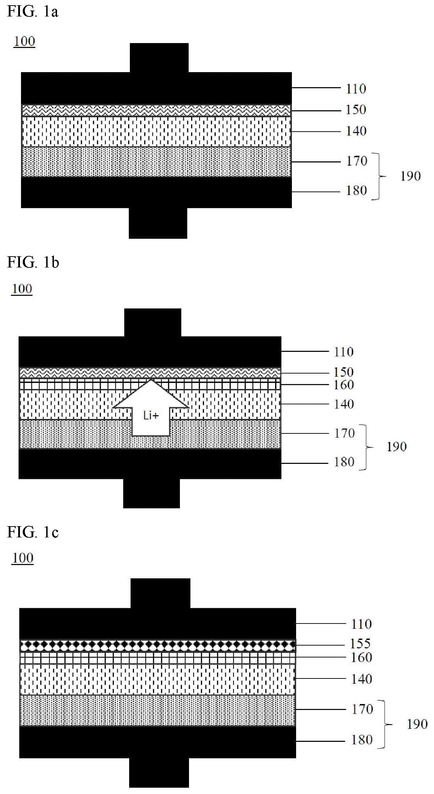

An all-solid-state battery 100 according to disclosed aspects is shown in FIGS. 1a-1c. FIG. 1a illustrates the all-solid-state battery 100 after assembly, but before charging. In this state, there is provided a positive electrode 190 comprising a positive electrode current collector 180 and a positive electrode active material layer 170, a negative electrode current collector 110, and a solid electrolyte 140 interposed between the negative electrode current collector 110 and the positive electrode active material layer 170, as shown in FIG. 1a. The all-solid-state battery 100 further comprises a silicon-containing metal layer 150 on a surface of the negative electrode current collector 110 facing the solid electrolyte 140. The silicon-containing metal layer may be formed or disposed directly on the surface of the negative electrode current collector facing the solid electrolyte layer.

During initial charge of the all-solid-state battery 100, a lithium metal layer 160 begins to form on the silicon-containing metal layer 150 on the negative electrode current collector 110 by movement of lithium ions from the positive electrode active material layer 170 to the silicon-containing metal layer 150 through charge, as illustrated in FIG. 1b. Charging of the battery extracts lithium from the positive electrode active material layer and reversibly deposits the lithium on a surface of the silicon-containing metal layer 150 facing the solid electrolyte 140. In this manner, the silicon-containing metal layer 150 is lithiated (or "pre-lithiated") to form a pre-lithiated silicon-containing metal layer 155, as seen in FIG. 1c.

The parameters of the initial charge for prelithiating the silicon-containing metal layer 150 and forming the lithium metal layer 160 are not particularly limited so long as the silicon in the silicon-containing metal layer is fully lithiated. In the pre-lithiation process, Li-Si is formed on or in the silicon-containing metal layer 150. The Li-Si acts as substrate for lithium metal nucleation in the lithium metal layer 160, and silicon lithiation/delithiation involved in subsequent cycling is offset by lowering Ns/P so the silicon is not involved from the second cycle onward. In the all-solid-state battery 100, the Li-Si formed in the silicon-containing metal layer 150 during pre-lithiation functions as an Li deposition site with reduced or no subsequent lithiation of the silicon in the silicon-containing metal layer 150. Accordingly, the silicon-containing metal layer 150 functions as a lithium deposition site with reduced or no subsequent lithiation of silicon). In aspects, this is achieved by lowering Ns/P Si cell so that the silicon-containing metal layer 150 may be fully lithiated and then lithium may be plated. To achieve this, a one-time charge may be performed, for example, with 0.01 to 0.2C in a voltage range of 4.5 V to 2.5 V. When the charge is performed below the above-mentioned range, the lithium metal layer 160 is difficult to form, and when the charge is performed above the above-mentioned range, cell damage is caused, and charge and discharge are not properly progressed after overdischarge occurs.

During discharge, the lithium ions in the lithium metal layer 160 are "stripped" and transferred back to the positive electrode active material layer, while the pre-lithiated silicon-containing metal layer 155 remains as the anode active material layer, and the thus formed anode, for subsequent charge/discharge cycles.

The disclosed all-solid-state battery 100 may endure deposition and stripping cycles up to a current density as high as 1.0 mA/cm², 2.0 mA/cm², 2.0 mA/cm², 3.0 mA/cm², 4.0 mA/cm², 5.0 mA/cm², or even 10.0 mA/cm².

### <Silicon-Containing Metal Layer>

In aspects, the characteristics of the silicon-containing metal layer are important in improving the critical current density and overall performance of the all-solid-state battery. The characteristics include, but are not limited to, Ns/P ratio of a charge capacity of the silicon-containing metal layer (Ns) to a charge capacity of the positive electrode (P), thickness of the layer, and morphology.

In some aspects, the all-solid-state battery may have an Ns/P ratio of a charge capacity of the silicon-containing metal layer (Ns) to a charge capacity of the positive electrode (P) during the charging process of in a range of, for example, 0.001 to 1.0, 0.001 to 0.5, 0.01 to 0.3, 0.01 to 0.2, 0.01 to 0.1, 0.01 to 0.09, 0.05 to 0.08, or 0.06 to 0.07. In preferred aspects, the Ns/P ratio is less than 0.1. Controlling the Ns/P ratio of the all-solid-state battery to be within the above ranges allows for increased cyclability of the battery.

In some aspects, the silicon-containing metal layer may have a thickness in a range of 1 nm to 10 µm, 5 nm to 5 µm, 10 nm to 5 µm, 20 nm to 3 µm, 40 nm to 2 µm, 50 nm to 1 µm, 60 nm to 800 nm, 70 nm to 700 nm, 80 nm to 600 nm, 100 nm to 500 nm, or 100 nm to 200 nm. In preferred aspects, the thickness is 50 nm to 200 nm. Controlling the thickness of the silicon-containing metal layer to be within the above ranges allows for full pre-lithiation of the silicon-containing metal layer and subsequent improved cycling characteristics.

In some aspects, the silicon-containing metal layer may be a crystalline or an amorphous silicon layer. Preferably, the silicon-containing metal layer is an amorphous silicon layer. In contrast to crystalline structures, amorphous silicon and LiₓSi₁₋ₓ alloy phases allow for elastic softening, yielding a bulk modulus below 30 GPa when x exceeds 0.5. Furthermore, with increasing lithium content, the bandgap of the Li-Si alloy diminishes, transitioning towards a metallic character suitable for use as current collectors. In preferred aspects, the silicon-containing metal layer may comprise amorphous LiₓSi₁₋ₓ (0.5<x<0.79), which has been found to improve the critical current density by up to five times at room temperature for anode-free solid-state batteries through the control of grain selection growth.

In aspects, the silicon-containing metal layer may be free of a silver-containing material and/or gold-containing material. Despite the lithophilic properties of these materials, they have been shown to require excess lithium concentrations which are unsuitable for disclosed objects. For example, precious metals like silver or gold may be too costly for commercialization.

In some aspects, the silicon-containing metal layer may exhibit the following characteristics: 1) possess a bulk modulus (<30 GPa) similar to that of lithium metal to alleviate strain-induced surface energy anisotropy, 2) exhibit an amorphous structure free of grain boundaries to avoid lithium creeping, 3) demonstrate electrochemical stability upon contact with lithium metal under reductive potential, 4) offer electronic conductivity to function as the current collector, and 5) display lithophilic properties to lower the nucleation barrier.

### <Li Metal>

The lithium metal layer formed through the process described above may have a thickness in a range of 100 nm to 100 µm, 500 nm to 50 µm, 1 µm to 25 µm, 2 µm to 20 µm, 5 µm to 15 µm, or 7 µm to 10 µm. In preferred aspects, the thickness is 1 µm to 50 µm. Controlling the thickness of lithium metal layer to be within the above ranges allows for increased battery charge and discharge efficiency, and increased energy density and lifetime of the battery.

### < Negative Electrode Current Collector >

The negative electrode current collector is not particularly limited as long as it is conductive without causing any chemical change in the all-solid-state battery, and for example, copper, stainless steel, aluminum, nickel, titanium, sintered carbon, copper or stainless steel whose surface is treated with carbon, nickel, titanium, silver or the like, or aluminum-cadmium alloy, etc., may be used. In preferred aspects, the negative electrode current collector is copper. Additionally, the negative electrode current collector may include various forms such as a film, a sheet, a foil, a net, a porous body, a foam, and a nonwoven fabric having minute irregularities formed on their surfaces.

### <Positive Electrode>

The positive electrode includes a positive electrode current collector, and the positive electrode current collector is not particularly restricted, as long as the positive electrode current collector exhibits high conductivity while the positive electrode current collector does not induce any chemical change in the battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver.

The positive electrode current collector is not limited to a particular type and may include those having high conductivity without causing a chemical change in the corresponding battery, for example, stainless steel, copper, aluminum, nickel, titanium, sintered carbon, or aluminum or stainless steel treated with carbon, nickel, titanium and silver on the surface.

A positive electrode active material includes an excellent positive electrode active material particle for sulfide-based all-solid-state batteries, the surface of which is reformed, according to the present disclosure. In addition, an additional material may be used depending on what a lithium secondary battery is used for. For example, a transition-metal-compound-based active material or a sulfide-based active material may be used.

Some aspects relate to wherein the positive electrode further comprises a positive electrode material, a solid electrolyte and a conductive material. In some aspects, the positive electrode material comprises a lithium nickel manganese cobalt oxide (hereinafter referred to as NMC, Li-NMC, LNMC, or NCM), which are mixed metal oxides of lithium, nickel, manganese and cobalt with the general formula LiNi*ₓ*Mn*_{y}*Co*_{1-x-y}*O₂. In some aspects, the positive electrode material comprises at least one of LiCoO₂, LiMn₂O₄, LiMnO₂, or LiNiO₂. In some aspects, the positive electrode material comprises sulfur.

In some aspects of the present disclosure, the positive electrode active material may comprise at least one of lithium cobalt oxide (LiCoO₂), lithium nickel oxide (LiNiO₂), lithium manganese oxide of Formula Li₁₊ₓMn₂₋ₓO₄ (x is 0 to 0.33, for example LiMn₂O₄), LiMnO₃, LiMn₂O₃, LiMnO₂, lithium copper oxide (Li₂CuO₂); vanadium oxide such as LiV₃O₈, LiV₂O₄, V₂O₅, Cu₂V₂O₇, Ni-site lithium nickel oxide represented by Formula LiNi₁₋ₓMₓO₂ (M = Co, Mn, Al, Cu, Fe, Mg, B or Ga, 0<x<1), for example, LiNi_{1-z}(Co,Mn,Al)_{z}O₂ (0<z<1); lithium manganese composite oxide represented by Formula LiMn₂₋ₓMₓO₄ (M = Co, Ni, Fe, Cr, Zn or Ta, x = 0.01 ~ 1, for example, LiMn_{1.5}Ni_{0.5}O₄ or Li₂Mn₃MO₈ (M = Fe, Co, Ni, Cu or Zn); LiMn₂O₄ with partial substitution of alkali earth metal ion for Li in Formula; disulfide compounds; Fe₂(MoO₄)_{3,} or lithium iron phosphate (LiFePO₄). In some aspects of the present disclosure, the lithium iron phosphate may have all or at least part of the of the active material particle surface coated with a carbon material to improve conductivity.

According to aspects of the disclosure, the positive electrode active material may comprise at least one selected from Lithium Nickel Cobalt Manganese Oxide (for example, Li(Ni,Co,Mn)O₂, LiNi_{1-z}(Co,Mn,Al)_{z}O₂ (0<z<1)), Lithium Iron Phosphate (for example, LiFePO4/C), Lithium Nickel Manganese Spinel (for example, LiNi_{0.5}Mn_{1.5}O₄), Lithium Nickel Cobalt Aluminum Oxide (for example, Li(Ni,Co,Al)O₂), Lithium Manganese Oxide (for example, LiMn₂O₄) and Lithium Cobalt Oxide (for example, LiCoO₂).

According to some aspects of the present disclosure, the positive electrode active material may comprise lithium transition metal composite oxide, and the transition metal may comprise at least one of Co, Mn Ni or Al.

In some aspects of the present disclosure, the lithium transition metal composite oxide may comprise at least one of compounds represented by the following formula 1.

[Formula 1] LiₓNiₐCo_{b}Mn_{c}M_{z}O_{y}

In the above Formula 1, 0.5≤x≤1.5, 0<a≤1, 0≤b<1, 0≤c<1, 0≤z<1, 1.5<y<5, a+b+c+z is 1 or less, and M may comprise at least one selected from Al, Cu, Fe, Mg and B.

In some aspects of the present disclosure, the positive electrode active material includes a positive electrode active material having high Ni content of a of 0.5 or more, and its specific example may comprise LiNi_{0.8}Co_{0.1}Mn_{0.1}O₂.

In some aspects of the present disclosure, the positive electrode conductive material may comprise, for example, at least one conductive material selected from the group consisting of graphite, carbon black, carbon fibers or metal fibers, metal powder, conductive whiskers, conductive metal oxide, activated carbon or polyphenylene derivatives. More specifically, the positive electrode conductive material may be at least one conductive material selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide.

The current collector is not limited to a particular type and may include those having high conductivity without causing a chemical change in the corresponding battery, for example, stainless steel, copper, aluminum, nickel, titanium, sintered carbon, or aluminum or stainless steel treated with carbon, nickel, titanium and silver on the surface.

The positive electrode binder resin may include polymer for electrode commonly used in the technical field. Non-limiting examples of the binder resin may include, but are not limited to, polyvinylidene difluoride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose.

In some aspects of the present disclosure, the solid electrolyte included in the positive electrode may comprise at least one selected from a polymer-based solid electrolyte, an oxide-based solid electrolyte and a sulfide-containing solid electrolyte. In some aspects of the present disclosure, the positive electrode active material may comprise the sulfide-containing solid electrolyte described in the solid electrolyte membrane.

In some aspects of the present disclosure, the positive electrode active material is included in the positive electrode in an amount of 50 wt% or more based on 100 wt% of the positive electrode active material layer. Additionally, the solid electrolyte is, according to aspects of the disclosure, included in the positive electrode in an amount of 10 wt% to 40 wt% based on 100 wt% of the positive electrode active material layer.

### <Solid Electrolyte>

For purposes of the solid electrolyte interposed between the negative electrode current collector and the positive electrode in the all-solid-state battery, any suitable sulfide-containing electrolyte material may be used. As used here, "sulfide-based electrolyte" refers to an electrolyte that includes inorganic materials containing S which conduct ions (*e.g.,* Li⁺), and which are suitable for electrically insulating the positive and negative electrodes of an electrochemical cell. Exemplary sulfide-containing electrolytes are set forth in Shaojie Chen et al., "Sulfide solid electrolytes for all-solid-state lithium batteries: Structure, conductivity, stability and application," Energy Storage Materials, Volume 14, Pages 58-74 (September 2018), which is hereby expressly incorporated by reference in its entirety.

For example, many sulfide-containing electrolyte materials are particularly attractive due to their superionic conductivities (as high as ~10⁻² S cm⁻¹) and deformability. In particular, Li₃P₇S₁₁, Li₁₀GeP₂S₁₂, and Na₃PS₄ and Li₆PS₅Cl have been reported to exhibit high ionic conductivities; some even close to those of liquid electrolytes. According to aspects of the disclosure, the sulfide solid electrolyte materials also provide a low Young's modulus, which is beneficial for producing favorable interface contacts with electrode materials by simple cold pressing at room temperature.

The sulfide-containing solid electrolyte, according to aspects of the disclosure, may contain sulfur (S) and have the ionic conductivity of metal belonging to Group I or II in the periodic table*, e.g.,* Li⁺. Additionally, in an aspect of the present disclosure, the selected solid electrolyte has the ionic conductivity of 1x10⁻⁵ S/cm, or according to some aspects of the disclosure, 1x10⁻³ S/cm or more.

Non-limiting examples of the sulfide-containing solid electrolyte may include Li-P-S-based glass, Li-P-S-based glass ceramic and argyrodite-based sulfide-containing solid electrolyte.

Non-limiting examples of the sulfide-containing solid electrolyte may include at least one of xLi₂S-yP₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂ or Li₂S-GeS₂-ZnS, Li6PS5X (X = at least one of Cl, Br or I).

In an aspect of the present disclosure, the sulfide-containing solid electrolyte may comprise at least one selected from LPS-based glass or glass ceramic such as xLi₂S-yP₂S₅, or an argyrodite-based sulfide-containing solid electrolyte (Li₆PS₅X; X = Cl, Br, I).

In another aspect, the solid electrolyte may include a solid electrolyte commonly used in the all-solid-state battery, such as an inorganic solid electrolyte or an organic solid electrolyte may be used.

In the case of the inorganic solid electrolyte, a ceramic material, a crystalline material or an amorphous material may be used. For instance, inorganic solid electrolytes such as thio-LISICON (Li_{3.25}Ge_{0.25}P_{0.75}S₄), Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃S₁₁, Li₂O-B₂O₃, Li₂O-B₂O₃-P₂O₅, Li₂O-V₂O₅-SiO₂, Li₂O-B₂O₃, Li₃PO₄, Li₂O-Li₂WO₄-B₂O₃, LiPON, LiBON, Li₂O-SiO₂, LiI, Li₃N, Li₅La₃Ta₂O₁₂, Li₇La₃Zr₂O₁₂, Li₆BaLa₂Ta₂O₁₂, Li₃PO_{(4-3/2w)}Nw (wherein w is w<1), and Li_{3.6}Si_{0.6}P_{0.4}O₄ may be used.

The average size of sulfide-based particles is, for example, 0.1 µm to 50 µm, or 0.5 µm to 20 µm, which is within the size range of sulfide-based particles used in well-known all-solid-state batteries. In the case in which the average size of the sulfide-based particles is less than the above range, the sulfide-based particles may form lumps. In the case in which the average size of the sulfide-based particles is greater than the above range, on the other hand, the porosity of the manufactured solid electrolyte is high, whereby the characteristics of the battery may be deteriorated. For example, the capacity of the battery may be reduced.

The sulfide-based particle may have an ion conductivity of 1×10⁻⁴ S/cm or more, or the sulfide-based particle may have an ion conductivity of 1×10⁻³ S/cm or more.

In addition to the above-mentioned sulfide-based solid electrolytes, other well-known solid electrolytes may also be used. For example, an inorganic solid electrolyte, such as Li₂O-B₂O₃, Li₂O-B₂O₃-P₂O₅, Li₂O-V₂O₅-SiO₂, Li₃PO₄, Li₂O-Li₂WO₄-B₂O₃, LiPON, LiBON, Li₂O-SiO₂, LiI, Li₃N, Li₅La₃Ta₂O₁₂, Li₇La₃Zr₂O₁₂, Li₆BaLa₂Ta₂O₁₂, Li₃PO_{(4-3/2w)}N_{w} (w<1), or Li_{3.6}Si_{0.6}P_{0.4}O₄, may be used.

In addition, examples of the organic solid electrolyte include organic solid electrolytes prepared by mixing lithium salt to polymeric materials such as polyethylene derivatives, polyethylene oxide derivatives, polypropylene oxide derivatives, phosphate ester polymers, agitation lysine, polyester sulfide, polyvinyl alcohol, and polyvinylidene fluoride. In this case, these may be used alone or in combination of at least one.

In preferred aspects, the solid electrolyte may be Li₇La₃Zr₂O₁₂ (LLZO) and Li₆PS₅Cl (LPSCl) and LiPON.

### <Manufacturing>

In aspects, the battery is assembled using an anode current collector and coating a surface of the anode current collector with a silicon-containing layer. The battery is assembled by setting a thickness of the silicon-containing layer and a ratio of the silicon-containing layer load amount to the cathode load amount, *i.e.*, Ns/P ratio, to be within specified ranges, and then charging by the cathode load amount, whereby intercalation of the silicon-containing layer and plating of lithium metal are continuously performed, thereby manufacturing a lithium secondary battery. In the lithium secondary battery thus manufactured, both the silicon-containing layer previously included during the battery assembly and the plated lithium metal due to charging are used as the anode active material. Therefore, the battery exhibits improved safety and lifetime characteristics while having a high capacity as compared with the conventional lithium ion battery and lithium metal secondary battery.

Moreover, in the step of assembling the battery, since lithium metal is not separately handled, blocking of moisture and oxygen is unnecessary and thus, the assembly process is simple. And when lithium metal is plated, since the specific surface area of the anode active material layer, which is the plating surface, is very large, the current density and overvoltage are significantly lower as compared with the lithium metal thin film. Therefore, the lithium metal does not grow in a dendritic shape and may be uniformly plated on the surface of the silicon-containing layer. Consequently, the plated lithium metal may be used as an active material.

The method for manufacturing the all-solid-state battery according to aspects may comprise providing a cell comprising a positive electrode, a negative electrode current collector, a solid electrolyte layer between the negative electrode current collector and the positive electrode, and a silicon-containing metal layer on a surface of the negative electrode current collector facing the solid electrolyte layer, and charging the cell to form a lithium metal on the negative electrode current collector by movement of lithium metal ions from the positive electrode to the silicon-containing metal layer on the surface of the negative electrode current collector through charge. The Ns/P of the battery and thicknesses and composition of the various layers may be as described herein with respect to other aspects.

Other methods are also contemplated by this disclosure. For example, the all-solid-state battery may be manufactured through a dry compression process, in which an electrode powder and solid electrolyte powder are manufactured, introduced into a predetermined mold, and pressed, or a slurry coating process, in which a slurry composition including an active material, a solvent, and a binder is manufactured, coated on a current collector, and dried. In the present disclosure, the method of manufacturing the all-solid-state battery may include, but is not limited to, in situ prelithiation of pure silicon with lithium powder in a cell assembly procedure.

This in situ prelithiation method may include pressing LPSCl powder (*e.g.*, 70 mg at 312 MPa for 10 seconds) to make a separator layer, spreading a desired amount of NCM composite powder on a side of the pressed LPSCl layer, and pressing the LPSCl layer (*e.g.*, at 380 MPa for 3 minutes). The method may include preparing a powder composite of lithium and silicon with a desired mass ratio for lithium and silicon and spreading on the other side of the LPSCl layer and pressing (*e.g.*, at 125 MPa for 10 seconds). The resulting cell may then be held at rest at a specified stack pressure (*e.g.*, 75 MPa for 6 hours) for the complete alloying reaction between the lithium and silicon, followed by cell cycling.

As another example, the solid electrolyte may be disposed between the positive electrode and the negative electrode current collector, and then the same is compressed in order to assemble a cell. The assembled cell is mounted in a sheathing member, and then the sheathing member is encapsulated by heating and compression. A laminate case made of aluminum or stainless steel, a cylindrical metal container, or a prismatic metal container may be appropriately used as the sheathing member.

The respective electrode slurry may be coated on the corresponding current collector using a method of placing the electrode slurry on the current collector and uniformly dispersing the electrode slurry with a doctor blade, a die casting method, a comma coating method, or a screen-printing method. Alternatively, the electrode slurry and the current collector may be formed on a separate substrate, and the electrode slurry and the current collector may be joined to each other through pressing or lamination. At this time, the concentration of a slurry solution or the number of coatings may be adjusted in order to adjust the final coating thickness.

The drying process is a process of removing the solvent or moisture from the slurry in order to dry the slurry coated on the metal current collector. The drying process may vary depending on the solvent that is used. For example, the drying process may be performed in a vacuum oven having a temperature of 50° C. to 200° C. For example, drying may be performed using a warm-air drying method, a hot-air drying method, a low-humidity-air drying method, a vacuum drying method, a (far-) infrared drying method, or an electron beam radiation method. The drying time is not particularly restricted. In general, drying is performed within a range of 30 seconds to 24 hours.

After the drying process, a cooling process may be further performed. In the cooling process, slow cooling to room temperature may be performed such that the recrystallized structure of the binder is sufficiently formed.

In addition, if necessary, a rolling process, in which the electrode is passed through a gap between two heated rolls such that the electrode is compressed so as to have a desired thickness, may be performed in order to increase the capacity density of the electrode and to improve adhesion between the current collector and the active material after the drying process. In the present disclosure, the rolling process is not particularly restricted. A well-known rolling process, such as pressing, may be performed. For example, the electrode may pass through a gap between rotating rolls, or a flat press machine may be used to press the electrode.

### EXAMPLES

The following examples are not intended to be limiting. The above disclosure provides many different aspects for implementing the features of the disclosure, and the following examples describe certain aspects. It will be appreciated that other modifications and methods known to one of ordinary skill in the art may also be applied to the following experimental procedures, without departing from the scope of the disclosure.

### EXPERIMENT I

Example 1 was formed as follows. Different particle size Li₅PS₅Cl (LPSCl) was purchased from two vendors, NEI Corporation (USA) and Mitsui Kinzoku (Japan). LPSCl was used as both catholyte and solid-state electrolyte separator. NCM811 (LG Chem, Republic of Korea) with a boron-based coating was selected as the cathode. As a conducting agent, vapor grown carbon fiber (VGCF) from Sigma Aldrich (Graphitized, Iron-free) was vacuum dried overnight at 160°C to remove moisture. Cathode composite was hand-mixed with a weight ratio of NCM811 : LPSCl : VGCF = 66 : 31 : 3.

A custom-made solid-state battery pellet cell made of two titanium rod current collector and 10 mm inner diameter polyether ether ketone (PEEK) holder was used for all-solid-state cell cycling. The 75 mg of LPSCl was compressed at 370 MPa as a solid-state separator. Afterwards, Cu foil or Si deposited Cu foil and NCM cathode composite (2 mAh/cm² for EBSD FIB/ion beam milling and 3 mAh/cm² for cycle performance) were inserted to each end of the separator layer, and then pressed at 370 MPa. The as-fabricated cell was cycled with the stack pressure of 5 MPa and in a range of temperature from room temperature to 80°C.

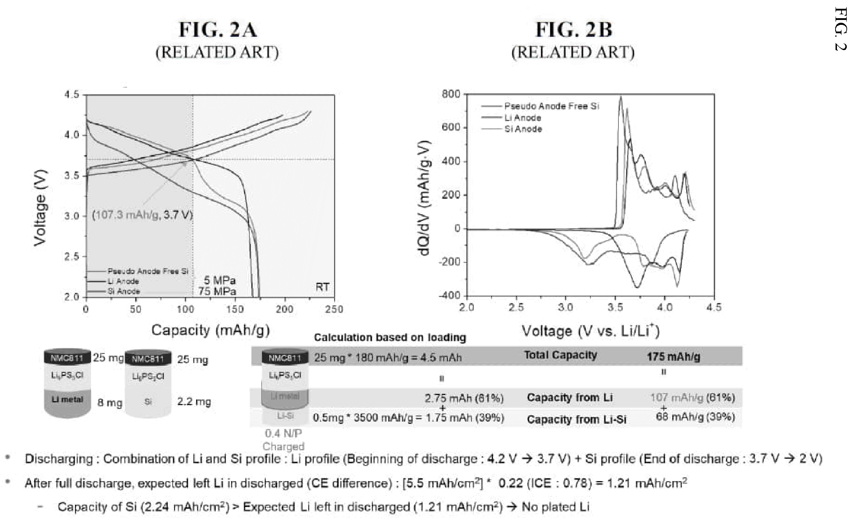

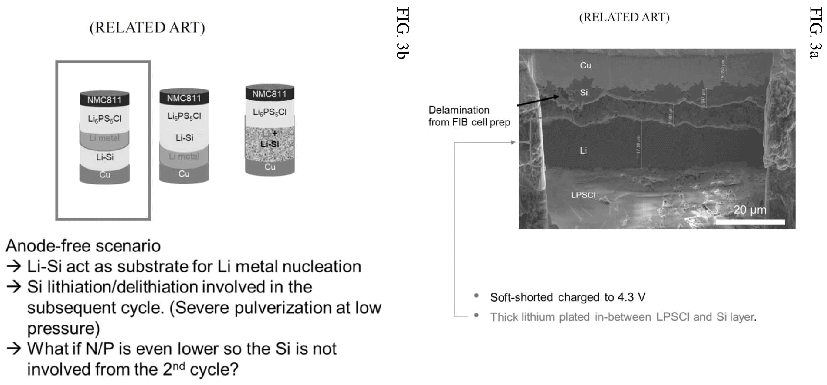

FIGS. 2a and 2b illustrate characteristics of related-art all-solid-state batteries formed in a manner similar to Example 1 except excluding the silicon-containing layer and including a lithium anode (Comparative Example 1) and a silicon anode (Comparative Example 2), and pseudo anode-free all-solid-state battery including a silicon layer having an Ns/P of 0.4 (Comparative Example 3). As seen in FIGS. 3a and 3b, the pseudo anode-free all-solid-state battery of Comparative Example 3 soft-shorted when charged to 4.3 V and silicon lithiation/delithiation was involved in subsequent cycles (*i.e.*, severe pulverization at low pressure). These results suggest that Ns/P ratio should be even lower than 0.4 so the silicon is not involved from the subsequent cycles after prelithiation.

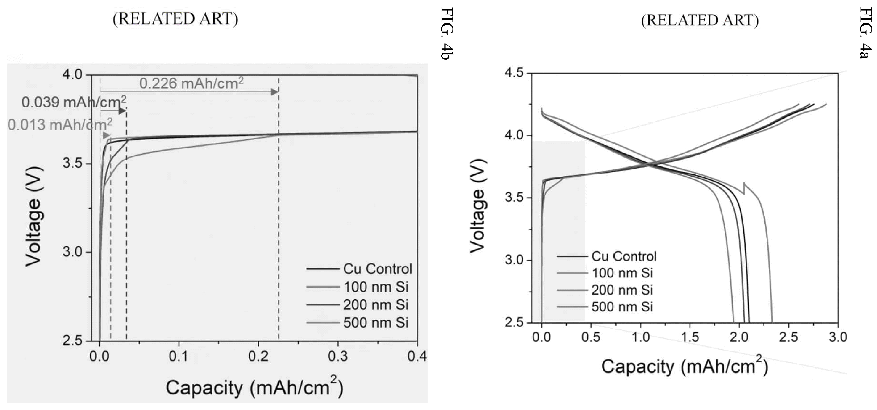

FIGS. 4a and 4b show that, on charge, depending on silicon layer thickness, initial lithiation of Si capacity varies. For a 500 nm thick Si layer, 0.226 mAh/cm² from 2.6 mAh/cm² charge capacity, around 8.7% of charge capacity for lithiation of Si, and the rest (91.3%) should be plated as lithium. On discharge, no two-step discharge (*i.e.*, no transition) was observed for "Li stripping to Li-Si delithiation". Due to initial lithium inventory loss, delithiation of Si is not involved. Only lithium stripping was shown in the voltage curve.

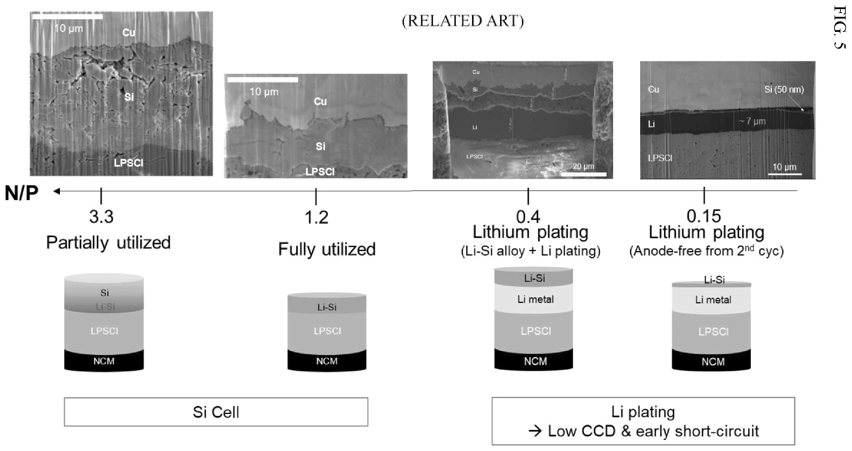

FIG. 5 shows the effects of the N/P ratios of Comparative Example 2 (silicon anode) and Comparative Example 3 (pseudo anode-free all-solid-state battery) on lithium plating and subsequent cycling. As seen FIG. 5, Comparative Example 3 exhibited low critical current density (CCD) and early short circuiting.

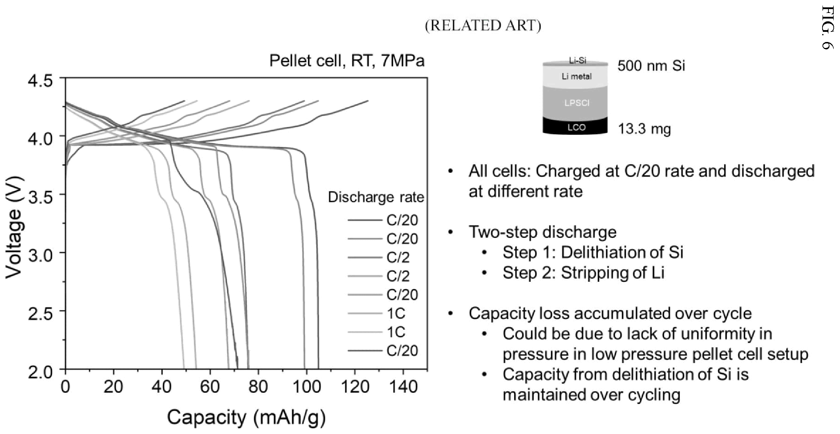

FIG. 6 illustrates the fast discharge characteristics of pseudo-anode free cells (Comparative Example 3). As seen in FIG. 6, capacity loss accumulated over cycle, which could be due to lack of uniformity in pressure in low pressure pellet cell setup, and capacity from delithiation of Si being maintained over cycling.

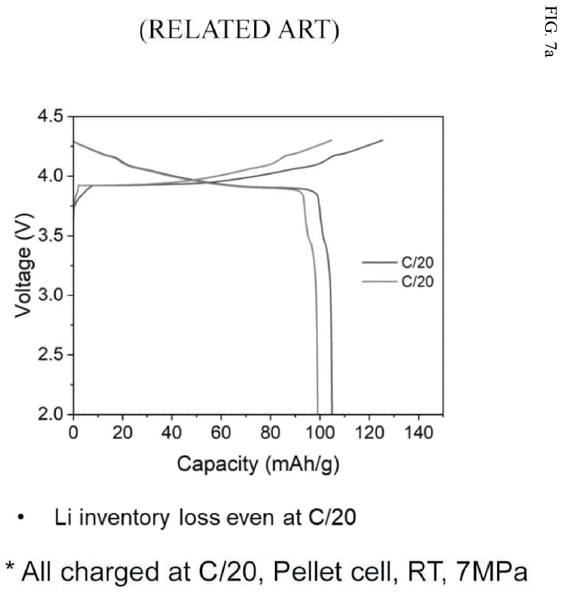

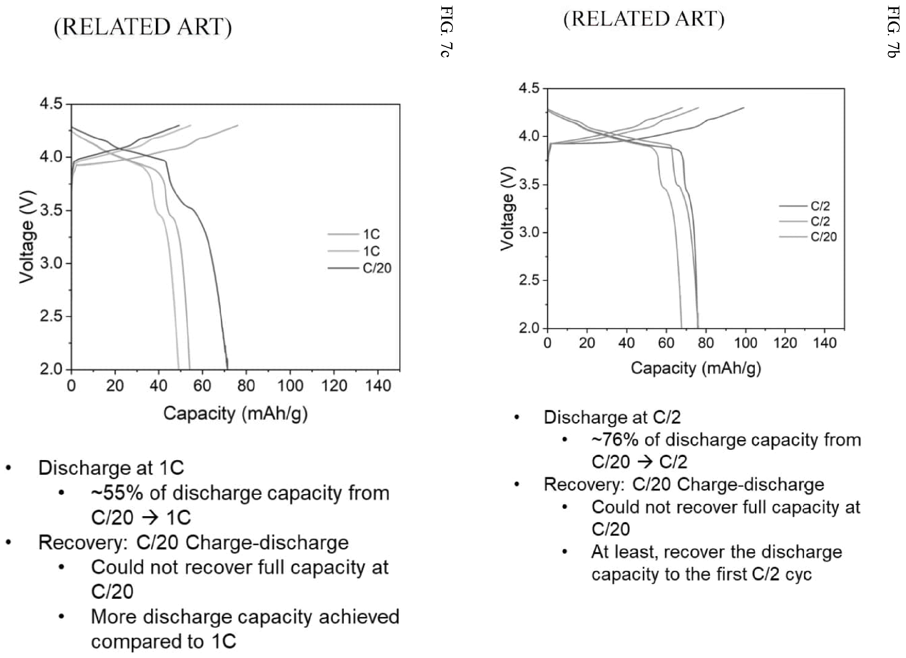

FIG. 7 illustrates the fast cycling characteristics of pseudo-anode free cells (Comparative Example 3). As seen in FIG. 7, lithium inventory loss was observed even at C/20, and full capacity could not be recovered at C/20.

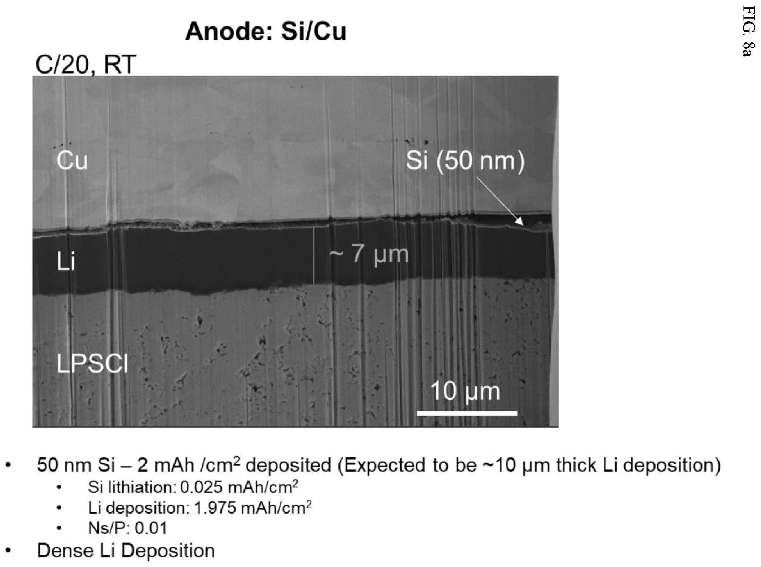

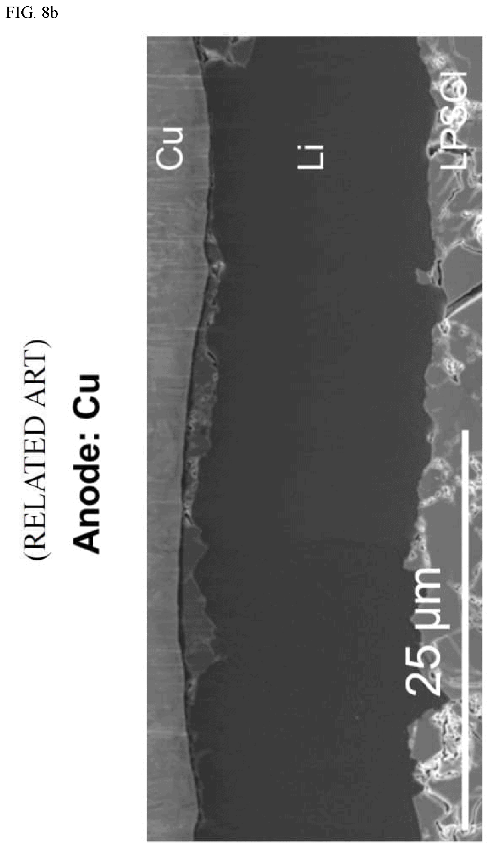

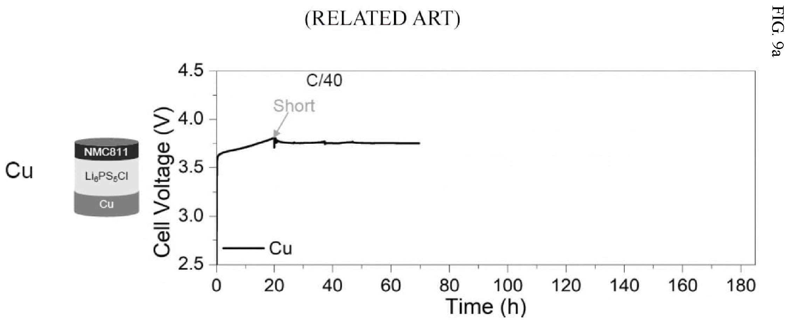

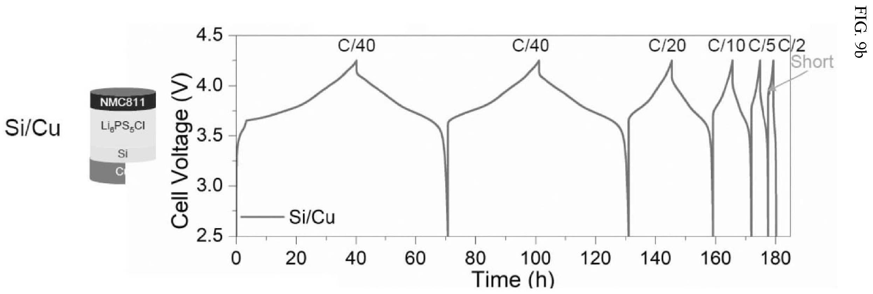

FIG. 8a illustrates an anode-free all-solid-state battery including a silicon layer having Ns/P of 0.01 (Example 1 described above) and FIG. 8b illustrates a related-art all-solid-state battery including a copper anode (Comparative Example 4). As seen in FIGS. 9a and 9b, Example 1 exhibited improved cyclability over Comparative Example 4. These results show the increased cyclability of batteries employing an anode-free all-solid-state battery including a silicon layer having a low Ns/P ratio according to aspects.

Table 1 below illustrates calculated values of Ns/P ratios depending on silicon layer thickness.

**Table 1. Ns/P ratio determination.**

| **Fixed Cathode Loading (mAh/cm²)** | **Thickness of deposited Si (nm)** | **Si Anode Capacity (mAh/cm²)** | **Li metal deposition (mAh/cm²)** | **N/P Ratio (if assume the cell is Si anode cell)** |
|---|---|---|---|---|
| 3 | 100 | 0.05 | 2.95 | 0.016666667 |
| 3 | 200 | 0.1 | 2.9 | 0.033333333 |
| 3 | 300 | 0.15 | 2.85 | 0.05 |
| 3 | 400 | 0.2 | 2.8 | 0.066666667 |
| 3 | 500 | 0.25 | 2.75 | 0.083333333 |
| 3 | 600 | 0.3 | 2.7 | 0.1 |
| 3 | 700 | 0.35 | 2.65 | 0.116666667 |
| 3 | 800 | 0.4 | 2.6 | 0.133333333 |
| 3 | 900 | 0.45 | 2.55 | 0.15 |
| 3 | 1000 | 0.5 | 2.5 | 0.166666667 |
| 3 | 1100 | 0.55 | 2.45 | 0.183333333 |
| 3 | 1200 | 0.6 | 2.4 | 0.2 |
| 3 | 1300 | 0.65 | 2.35 | 0.216666667 |
| 3 | 1400 | 0.7 | 2.3 | 0.233333333 |
| 3 | 1500 | 0.75 | 2.25 | 0.25 |
| 3 | 1600 | 0.8 | 2.2 | 0.266666667 |
| 3 | 1700 | 0.85 | 2.15 | 0.283333333 |
| 3 | 1800 | 0.9 | 2.1 | 0.3 |
| 3 | 1900 | 0.95 | 2.05 | 0.316666667 |
| 3 | 2000 | 1 | 2 | 0.333333333 |
| 3 | 2100 | 1.05 | 1.95 | 0.35 |
| 3 | 2200 | 1.1 | 1.9 | 0.366666667 |
| 3 | 2300 | 1.15 | 1.85 | 0.383333333 |
| 3 | 2400 | 1.2 | 1.8 | 0.4 |
| 3 | 2500 | 1.25 | 1.75 | 0.416666667 |
| 3 | 2600 | 1.3 | 1.7 | 0.433333333 |
| 3 | 2700 | 1.35 | 1.65 | 0.45 |
| 3 | 2800 | 1.4 | 1.6 | 0.466666667 |
| 3 | 2900 | 1.45 | 1.55 | 0.483333333 |
| 3 | 3000 | 1.5 | 1.5 | 0.5 |
| 3 | 3100 | 1.55 | 1.45 | 0.516666667 |
| 3 | 3200 | 1.6 | 1.4 | 0.533333333 |
| 3 | 3300 | 1.65 | 1.35 | 0.55 |
| 3 | 3400 | 1.7 | 1.3 | 0.566666667 |
| 3 | 3500 | 1.75 | 1.25 | 0.583333333 |
| 3 | 3600 | 1.8 | 1.2 | 0.6 |
| 3 | 3700 | 1.85 | 1.15 | 0.616666667 |
| 3 | 3800 | 1.9 | 1.1 | 0.633333333 |
| 3 | 3900 | 1.95 | 1.05 | 0.65 |
| 3 | 4000 | 2 | 1 | 0.666666667 |
| 3 | 4100 | 2.05 | 0.95 | 0.683333333 |
| 3 | 4200 | 2.1 | 0.9 | 0.7 |
| 3 | 4300 | 2.15 | 0.85 | 0.716666667 |
| 3 | 4400 | 2.2 | 0.8 | 0.733333333 |
| 3 | 4500 | 2.25 | 0.75 | 0.75 |
| 3 | 4600 | 2.3 | 0.7 | 0.766666667 |
| 3 | 4700 | 2.35 | 0.65 | 0.783333333 |
| 3 | 4800 | 2.4 | 0.6 | 0.8 |
| 3 | 4900 | 2.45 | 0.55 | 0.816666667 |
| 3 | 5000 | 2.5 | 0.5 | 0.833333333 |

| | | | | |
|---|---|---|---|---|
| *Assumes 1 nm Si has 0.0005 mAh/cm² specific capacity (500 nm Si = 0.25 mAh/cm²) | | | | |

As seen in Table 1, silicon layer thickness and Ns/P ratio have linear relationship for a fixed cathode capacity.

Table 2 below illustrates the relationship between Si layer thickness and Ns/P ratio at given cathode areal loading amounts.

**Table 2. Relationship between Si layer thickness and Ns/P ratio.**

| **Fixed Cathode Loading (mAh/cm²)** | **Thickness of deposited Si (nm)** | **Si Anode Capacity (mAh/cm²)** | **Li metal deposition (mAh/cm²)** | **Ns/P Ratio (if assume the cell is Si anode cell)** |
|---|---|---|---|---|
| 3 | 50 | 0.04 | 2.96 | 0.01 |
| 3 | 100 | 0.08 | 2.92 | 0.03 |
| 3 | 200 | 0.17 | 2.83 | 0.06 |
| 3 | 300 | 0.25 | 2.75 | 0.08 |
| 3 | 400 | 0.33 | 2.67 | 0.11 |
| 3 | 500 | 0.42 | 2.58 | 0.14 |
| 3 | 600 | 0.50 | 2.50 | 0.17 |
| 3 | 700 | 0.58 | 2.42 | 0.19 |
| 3 | 800 | 0.67 | 2.33 | 0.22 |
| 3 | 900 | 0.75 | 2.25 | 0.25 |
| 3 | 1000 | 0.83 | 2.17 | 0.28 |
| 6 | 50 | 0.04 | 5.96 | 0.01 |
| 6 | 100 | 0.08 | 5.92 | 0.01 |
| 6 | 200 | 0.17 | 5.83 | 0.03 |
| 6 | 300 | 0.25 | 5.75 | 0.04 |
| 6 | 400 | 0.33 | 5.67 | 0.06 |
| 6 | 500 | 0.42 | 5.58 | 0.07 |
| 6 | 600 | 0.50 | 5.50 | 0.08 |
| 6 | 700 | 0.58 | 5.42 | 0.10 |
| 6 | 800 | 0.67 | 5.33 | 0.11 |
| 6 | 900 | 0.75 | 5.25 | 0.12 |
| 6 | 1000 | 0.83 | 5.17 | 0.14 |

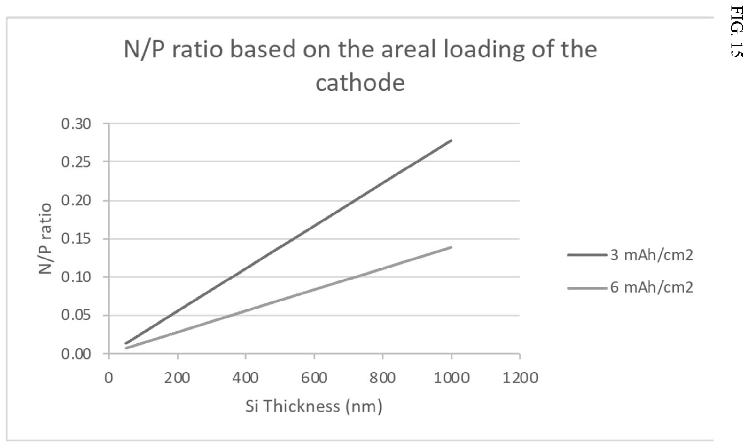

As seen in Table 2 and FIG. 15, the Ns/P ratio varies with silicon thickness (nm) depending on the cathode areal loading (3 mAh/cm² and 6 mAh/cm²). The Ns/P ratio is calculated by dividing the areal capacity of the anode by the areal capacity of the cathode (Ns/P ratio = areal capacity of anode / areal capacity of cathode). As the thickness of the silicon increases, the Ns/P ratio increases. However, since the Ns/P ratio also depends on the areal capacity of the cathode, variations in the cathode areal capacity can lead to different Ns/P ratios even for anodes with the same silicon thickness.

### EXPERIMENT II

Example 2 was formed as follows. Li₆PS₅Cl (LPSCl) from NEI Corporation (USA) and Mitsui Kinzoku (Japan) was used as both catholyte and solid-state electrolyte separator. LiNi_{0.8}Mn_{0.1c}o_{0.1}O₂ (NMC811) with a boron-based surface coating from LG Chem (Republic of Korea) was selected as the cathode. As a conducting agent, vapor grown carbon fiber (VGCF) from Sigma Aldrich (Graphitized, Iron-free) was vacuum dried overnight at 160°C to remove moisture. Cathode composite was hand-mixed with a weight ratio of NMC811 : LPSCl : VGCF = 66 : 31 : 3. The custom-made solid-state battery pellet cell made of two titanium rod current collector and 10 mm inner diameter polyether ether ketone (PEEK) holder was used for anode-free solid-state cell cycling. The 75 mg of LPSCl was compressed at 370 MPa as a solid-state separator. Afterwards, Cu foil or Si deposited Cu foil and NMC cathode composite (2~3 mAh/cm² loading) were inserted to each end of the separator layer, and then pressed at 370 MPa. The as-fabricated cell was cycled with the stack pressure of 5 MPa and in a range of temperature from 25 °C to 80°C.

All the anode-free thin-film cells were prepared on alumina substrates (Valley Design) in the following procedures. First, Cu (≈800 nm) was deposited by DC sputtering (Denton Discovery 18 Sputter System) at 200 W under 2.5 mTorr of Ar atmosphere. For Cu/Si/LiPON/Li cell, amorphous Si was deposited on top of Cu layer with ≈500 nm thickness by RF sputtering (Denton Discovery 18 Sputter System) at 350 W RF power and 5 mTorr Ar pressure. On top of bare Cu or Si deposited Cu, LiPON electrolyte (≈3 µm) was sputtered by RF sputtering. A Li₃PO₄ target with ≈2-inch in diameter (Plasmaterials) was used as a sputtering target. The sputtering power was set at 50 W and the partial pressure of the nitrogen gas (Airgas, ultrahigh purity grade) was at 15 mTorr for deposition. At last, Li-metal (≈3 µm) was then deposited on to the LiPON by thermal evaporation (LC Technology Solutions Inc.), which was equipped inside Ar filled glovebox. The electrochemical active area was defined as 2 mm × 2 mm.

Prepared cells were immediately tested inside the glovebox without air exposure. The cells were fixed in the pressure fixture and pressure is applied on Li metal through Cu plunger. The load on the thin film cell was adjusted to be ~1 MPa and monitored through the load sensor that was sandwiched together with cell. The electrical contact of the Cu side was made directly through an alligator clip while that of Li side was through Cu plunger of the pressure fixture. Li deposition and stripping tests with different current densities were conducted at 25 °C by a potentiostat with ultra-low current option, Biologic SP-200.

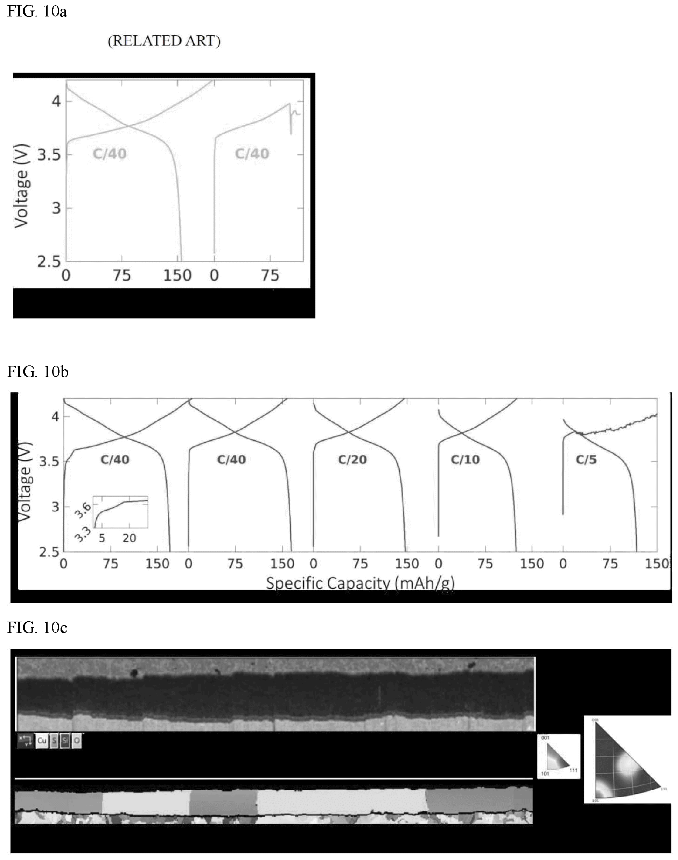

A 500 nm-thick layer of amorphous Si was deposited onto a Cu substrate using a sputtering technique. Subsequently, anode-free solid state full cells were assembled to assess the differences in rate performance between the bare Cu current collector and the Cu current collector with Si deposition. The areal capacity for this rate performance assessment was increased to 3 mAh/cm² to align with application considerations. As shown in FIG. 10a, it was evident that the cell with bare Cu experienced a short circuit during the second cycle, even at the low rate of C/40. As for the Si-deposited Cu (FIG. 10b), a distinct two-step voltage profile for the first charge emerged due to Si lithiation preceding Li deposition. A slopy curve was observed up to 3.7 V corresponding to a real capacity of 0.25 mAh/cm² for Si lithiation, followed by Li deposition onto the LiₓSi₁₋ₓ alloy. The capacity of Si lithiation was calculated to be 2320 mAh/g, corresponding to Li_{2.43}Si or Li_{0.7}Si_{0.3}, a composition falling short of full lithiation up to Li_{3.75}Si or Li_{0.79}Si_{0.21}, thereby maintaining Si within the amorphous phase range to avoid recrystallization. Furthermore, the absence of Si (de)lithiation features below 3.7 V from the first discharge suggests the enduring presence of the formed Li_{0.7}Si_{0.3} seed layer throughout subsequent cycling. The anode-free battery featuring Si-deposited Cu sustains operations up to a higher rate of C/5 (0.6 mA/cm²), outperforming conventional results at room temperature, as shown in Table 3 below (Reference: Minghao Zhang et al., "Grain selection growth of soft metal in electrochemical processes"; 2025, Joule 9, 101847; (2), (9), (10), and (12): 2, 9, 10, and 12 in "REFERENCE" of the Reference).

**Table 3. Literature data for the electrochemical performance of anode-free solid-state batteries at room temperature. Results exhibiting areal deposition and stripping capacities exceeding 2 mAh/cm² were exclusively included.**

| **Areal Capacity (mAh/cm²)** | **Current Density (mA/cm²)** | **Stacking Pressure (MPa)** | **Working Electrode** | **Electrolyte** | **Counter Electrode** | **Ref.** |
|---|---|---|---|---|---|---|
| 3 | 0.5 | 5 | NMC | LPSCl | Li,Si//Cu | Reference |
| 3 | 0.5 | 15 | Li | LPSCl | Cu | *(10)* |
| 3.1 | 0.155 | 10 | LCO | LLZTO-LiC6 | LIPAA-Ag/Cu | *(2)* |
| 5 | 0.5 | 4 | Li | LLZO | Cu | *(12)* |
| 5 | 0.5 | 13 | Li | LPSCl | Te-Cu | *(9)* |

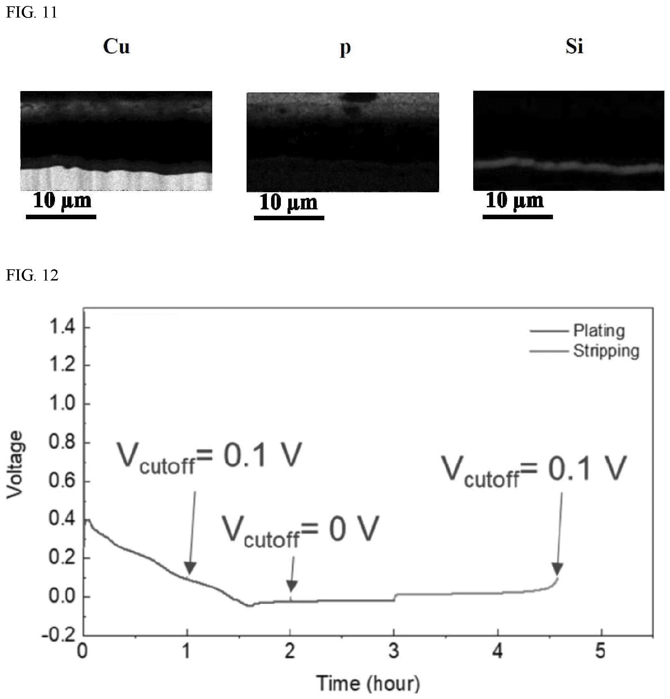

A cross-section of Li metal deposited on the Li_{0.7}Si_{0.3} seed layer was obtained with PFIB. Elemental analysis conducted via energy dispersive spectroscopy (EDS) in FIG. 10c illustrates the uniform growth of Li between the seed layer and LPSCl electrolyte. The Si seed layer retains its dense and thin film nature, with the thickness increasing to approximately 1.2 µm due to the lithiation process, as seen in FIG. 11. Significantly, even at a deposition temperature of 25 °C, the dominance of Li grains is evident, as seen in FIG. 10c. This contrasts with the (001) texture observed conventionally at the same temperature when utilizing a bare Cu substrate, which manifests the critical role of grain selection growth in facilitating fast kinetics during lithium deposition and stripping processes.

To further improve the critical current density with the designed amorphous silicon seed layer, an anode-free thin-film batteries employing lithium phosphorus oxynitride (LiPON) electrolyte was fabricated. The absence of well-defined grain boundaries, coupled with reduced Li diffusion anisotropy, makes amorphous LiPON electrolytes a promising choice for preventing Li creeping through grain boundaries and inducing short circuiting in solid-state batteries. Given the inherent ionic conductivity limitations of LiPON, typically in the range of 10⁻⁶ S/cm, thin-film batteries featuring approximately 3 µm of LiPON were selected to illustrate the effect of the silicon seed layer. Comprehensive testing protocols and parameters are provided in Table 4 below.

**Table 4. Protocol and parameters of Li deposition and stripping test with anode-free thin-film batteries at 25 °C. The order of current densities listed reflects the order of testing with each cell. Here, electrochemically active area is considered as the area of Li, which is 4 mm².**

| Set (3 cycles/set) | **Areal current (mA/cm²)** | **Plating time** | **Plating areal capacity** |
|---|---|---|---|
| 1st set | 0.02 | 1 h | 20 µAh/cm² (100 nm/cm²) |
| 2nd set | 0.1 | 1 h | 100 µAh/cm² (500 nm/cm²) |
| 3rd set | 0.2 | 0.5 h | |
| 4th set | 0.5 | 2.4 min | 20 µAh/cm² (100 nm/cm²) |
| 5th set | 1.0 | 1.2 min | |
| 6th set | 2.0 | 36 sec | |
| 7th set | 3.0 | 24 sec | |
| 8th set | 4.0 | 18 sec | |
| 9th set | 5.0 | 14.4 sec | |

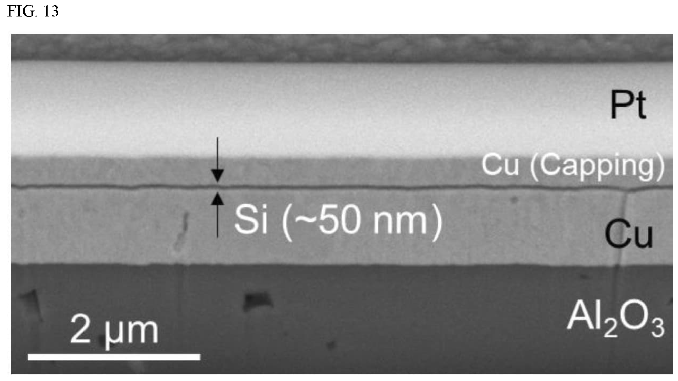

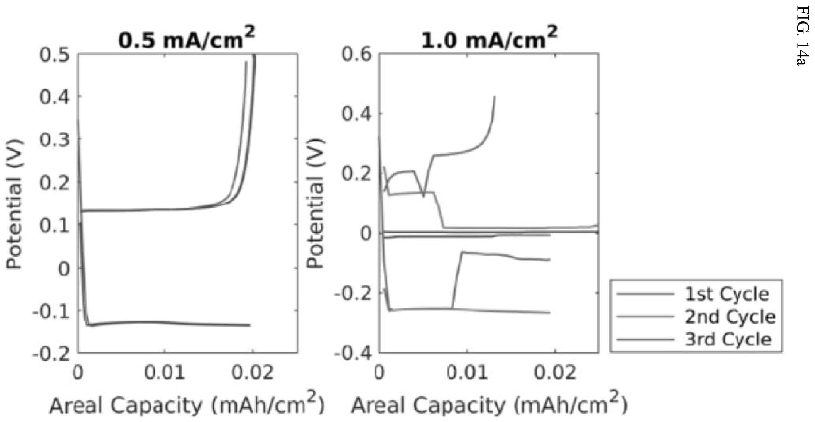

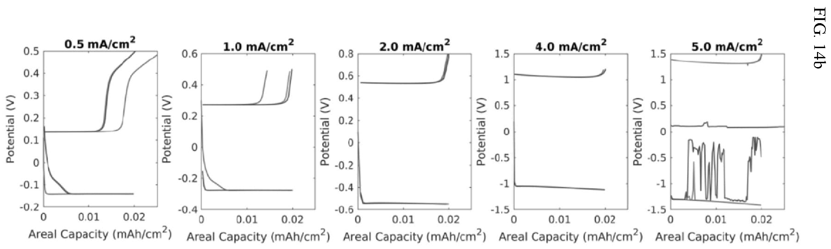

The lithiation into amorphous Si was confirmed during the first deposition process through the voltage slope until 0 V, as seen in FIG. 12, corresponding to an areal capacity of 0.028 mAh/cm². FIG. 12 shows a voltage profile for the initial cycle of a Cu/Si/LiPON/Li thin-film battery. The current density was set at 0.02 mA/cm². The plating step was continued until Li metal deposition for more than 1 hour and stripping step ended when Li metal was fully stripped. This translates to a lithiation composition of Li_{0.73}Si_{0.37}, with the silicon layer's thickness being 50 nm in the thin-film battery, as seen in FIG. 13. FIG. 13 shows an FIB-SEM image for the cross-section view of the 50 nm Si layer deposited on a Cu substrate for the anode-free thin-film battery fabrication. Sharp voltage drops in the subsequent cycles also indicate that the Si layer remains lithiated. The anode-free thin-film battery featuring the silicon seed layer endures deposition and stripping cycles up to a high current density of 5.0 mA/cm², as seen in FIGS. 14a and 14b. FIGS. 14a and 14b show rate performances testing for lithium metal deposition and stripping in thin-film batteries (FIG. 14a) and voltage profiles for Cu/LiPON/Li and Cu/Si/LiPON/Li cell at different current densities (FIG. 14b). The resulting critical current densities are the highest observed values attained at room temperature, outperforming thin-film batteries utilizing bare Cu current collectors by a factor of five.

These results show how the surface energy anisotropy of soft metals may dominate grain selection growth during electrochemical processes, imposing kinetic constraints particularly at room temperature. Leveraging this mechanistic understanding, the critical current density of anode-free solid-state batteries may be improved through the design of a LiₓSi₁₋ₓ (0.5<x<0.79) interfacial layer.

It will be understood by those of ordinary skill in the art that aspects of the present disclosure may be performed within a wide equivalent range of parameters without affecting the scope of the disclosure described herein. All publications, patent applications and patents disclosed herein are incorporated by reference in their entirety.

## Claims

1. A lithium all-solid-state battery comprising:
a positive electrode;
a negative electrode current collector;
a solid electrolyte layer between the negative electrode current collector and the positive electrode; and
a silicon-containing metal layer on a surface of the negative electrode current collector facing the solid electrolyte layer,
wherein lithium metal is formed on the negative electrode current collector by movement of lithium metal ions from the positive electrode to the silicon-containing metal layer on the surface of the negative electrode current collector through charge, and
wherein a ratio (Ns/P) of a charge capacity of the silicon-containing metal layer (Ns) to a charge capacity of the positive electrode (P) is less than 0.3.

2. The lithium all-solid-state battery according to claim 1, wherein silicon-containing metal layer comprises amorphous silicon.

3. The lithium all-solid-state battery according to claim 2, wherein the amorphous silicon comprises LiₓSi₁₋ₓ, wherein 0.5 < x < 0.79.

4. The lithium all-solid-state battery according to claim 1, wherein the ratio (Ns/P) of the charge capacity of the silicon-containing metal layer (Ns) to the charge capacity of the positive electrode (P) is less than 0.1.

5. The lithium all-solid-state battery according to claim 1, wherein the ratio (Ns/P) of the charge capacity of the silicon-containing metal layer (Ns) to the charge capacity of the positive electrode (P) is in a range of 0.001 or more to less than 0.1.

6. The lithium all-solid-state battery according to claim 1, wherein the silicon-containing metal layer has a thickness in a range of 5 nm to 5 µm.

7. The lithium all-solid-state battery according to claim 1, wherein the silicon-containing metal layer has a thickness in a range of 50 nm to 1 µm.

8. The lithium all-solid-state battery according to claim 1, wherein the silicon-containing metal layer has a thickness in a range of 50 nm to 200 nm.

9. The lithium all-solid-state battery according to claim 1, wherein the lithium metal forms a lithium metal layer having a thickness in a range of 1 µm to 50 µm.

10. The lithium all-solid-state battery according to claim 1, wherein the silicon-containing metal layer is directly on the surface of the negative electrode current collector facing the solid electrolyte layer.

11. The lithium all-solid-state battery according to claim 1, wherein the lithium metal is directly on the silicon-containing metal layer on the surface of the negative electrode current collector.

12. The lithium all-solid-state battery according to claim 1, wherein the silicon-containing metal layer is free of a silver-containing material.

13. The lithium all-solid-state battery according to claim 1, wherein the solid electrolyte layer comprises Li₇La₃Zr₂O₁₂ (LLZO), Li₆PS₅Cl (LPSCl), or LiPON.

14. The lithium all-solid-state battery according to claim 1, wherein the positive electrode comprises a positive electrode current collector and a positive electrode active material layer on at least one side of the positive electrode current collector, the positive electrode active material layer comprising a lithium-containing positive electrode active material selected from the group consisting of Li-NMC, LiCoO₂, LiMn₂O₄, LiMnO₂, and LiNiO₂.

15. The lithium all-solid-state battery according to claim 1, wherein the charge is in a voltage range of 4.5 V to 2.5 V.

16. The lithium all-solid-state battery according to claim 1, wherein the negative electrode current collector comprises at least one material selected from the group consisting of carbon, titanium, stainless steel, nickel, aluminum, and copper.

17. A method of manufacturing a lithium all-solid-state battery, the method comprising:
providing a cell comprising a positive electrode, a negative electrode current collector, a solid electrolyte layer between the negative electrode current collector and the positive electrode, and a silicon-containing metal layer on a surface of the negative electrode current collector facing the solid electrolyte layer; and
charging the cell to form a lithium metal on the negative electrode current collector by movement of lithium metal ions from the positive electrode to the silicon-containing metal layer on the surface of the negative electrode current collector through charge,
wherein a ratio (Ns/P) of a charge capacity of the silicon-containing metal layer (Ns) to a charge capacity of the positive electrode (P) is less than 0.3.

18. The method of manufacturing a lithium all-solid-state battery according to claim 17, wherein a thickness of the silicon-containing metal layer is in a range of 100 nm to 500 nm.

19. The method of manufacturing a lithium all-solid-state battery according to claim 17, wherein the lithium metal forms a lithium metal layer having a thickness in a range of 1 µm to 50 µm.

20. A lithium all-solid-state battery comprising:
a positive electrode;
a negative electrode current collector;
a solid electrolyte layer between the negative electrode current collector and the positive electrode; and
a silicon-containing metal layer on a surface of the negative electrode current collector facing the solid electrolyte layer,
wherein a ratio (Ns/P) of a charge capacity of the silicon-containing metal layer (Ns) to a charge capacity of the positive electrode (P) is less than 0.3, and
wherein the silicon-containing metal layer has a thickness in a range of 100 nm to 500 nm.
